# EUROPÄISCHE PATENTSCHRIFT

(11) **EP 1 811 263 B1**
(45) Veröffentlichungstag und Bekanntmachung des Hinweises auf die Patenterteilung: **13.09.2017**
(21) Anmeldenummer: 07000214.2
(22) Anmeldetag: 08.01.2007
(51) Int. Cl.: G01B 3/10

(54) **Bandmass**
Tape measure
Mètre à ruban

(30) Priorität: 19.01.2006 DE 202006000836 U
(43) Veröffentlichungstag der Anmeldung: 25.07.2007
(73) Patentinhaber: Stabila Messgeräte Gustav Ullrich GmbH, 76855 Annweiler (DE)
(72) Erfinder: Vock, Siegfried, 36460 Merkers (DE); Denk, Richard, 66995 Schönau (DE)
(74) Vertreter: Stoffregen, Hans-Herbert

(56) Entgegenhaltungen:
- DE-B- 1 194 159
- FR-A1- 2 011 396
- GB-A- 1 117 808
- US-A- 363 070
- US-A- 3 044 731
- US-A- 3 186 657
- US-A- 3 922 790
- US-A- 5 881 960

## Beschreibung

Die Erfindung bezieht sich auf ein Bandmaß umfassend ein Gehäuse mit in diesem aufrollbaren bzw. aus diesem abziehbaren Messband, das von einer Trommel ausgeht, die drehbar um ihre Achse in dem Gehäuse gelagert ist, wobei die Trommel mittels einer Handhabe drehbar ist, die zumindest abschnittsweise eine erste Außenseitenfläche des Gehäuses durchsetzt und von einem Träger ausgeht.

Aus der DE-U-297 00 224 ist ein Bandmaß mit Rahmen bekannt, der eine Wickeltrommel aufnimmt, die über eine außerhalb des Rahmens verlaufende Kurbel als Handhabe betätigbar ist. Ein aus der DE-C-34 04 629 bekanntes Bandmaß weist ein Gehäuse auf, in dem eine Drehachse mit einstückig mit dieser ausgebildeten Handkurbel gelagert ist.

Entsprechende Bandmaße mit handbetriebenem Aufspulmechanismus werden für Messbänder einer Länge von üblicherweise mehr als 10 m und flachem Bandquerschnitt benutzt.

Es sind auch Taschenbandmaße bekannt, die einen federbetriebenen Aufspulmechanismus aufweisen (EP-A-1 074 813). Das Maßband hat dabei einen gewölbten Bandquerschnitt.

Diesbezügliche auch als Taschenbandmaß bezeichnete Bandmaße weisen ein Gehäuse, das auch Kapsel genannt wird, dergestalt auf, dass die mit Maßeinheiten versehene Basislänge in eine sogenannte innere Messung zwischen zwei Begrenzungsflächen eingehen kann. An einer Begrenzungsfläche schlägt dabei der Nullpunkt des Maßbandes an. An der gegenüberliegenden Begrenzungsfläche schlägt die Außenkante des Gehäuses bzw. der Kapsel an. Am Maßband abgelesenes Maß zusätzlich der bekannten Basislänge des Gehäuses ergeben das "Innenmaß".

Bandmaße mit handbetriebenen Aufspulmechanismen bieten die Möglichkeit der Bestimmung eines Innenmaßes nicht. Vielmehr werden die Gehäuse oder Kapseln von langen Messbändern grundsätzlich nach ergonomischen Gesichtspunkten gestaltet, ohne dass eine vergleichbare Anschlagsituation wie bei einem Taschenbandmaß möglich ist.

Die Gehäuse bzw. Kapseln von Taschenbandmaßen sind häufig derart gestaltet, dass Eckanschläge in beliebiger Orientierung ermöglicht werden. Hierzu ist es erforderlich, dass die Seitenflächen planparallel zueinander verlaufen. Diese Planparallelität ist bei unter ergonomischen Gesichtspunkten gestalteten Gehäusen von Bandmaßen mit handbetriebenen Aufspulmechanismen nicht gegeben.

Die DE-C-1 194 159 bezieht sich auf ein in einem Gehäuse aufwickelbares Maßband, das mittels einer Kurbel betätigbar ist. Die Kurbel geht dabei von einem in dem Gehäuse eingelassenen Träger aus, der mit einem umlaufenden Flansch seitlich über der Außenseite des Bandmaßgehäuses vorsteht.

Ein Rollbandmaß nach der DE-U-1 944 081 weist eine Kurbel zum Aufwickeln des Maßbands auf. Die Kurbel geht von einem Träger aus, der über der Außenfläche des Gehäuses vorsteht.

Bei einem Bandmaß nach der DE-U-1 992 258 wird zum Aufwickeln des Messbands eine entlang der Außenseite des Bandmaßgehäuses verlaufende Kurbel betätigt.

Ein Messband nach der DE-B-26 14 269 ist über eine außerhalb eines Gehäuses verlaufende Kurbel aufrollbar.

Sowohl der GB-A-1 117 808 (siehe hierzu auch die bereits zuvor genannte DE-U-1944081) als auch der US-A-3 186 657 sind Bandmaße der eingangs genannten Art zu entnehmen, die eine zum Aufwickeln des Messbandes vorhandene Kurbel aufweisen, die über eine Gehäuseaußenseitenfläche sowohl in Nutz- als auch in Messstellung vorsteht. Um die Kurbel zu verschwenken, ist innerhalb des Gehäuses ein Stößel entlang der Achse der Trommel, auf die das Bandmaß aufwickelbar ist, verschiebbar.

Die US-A-3 922 790 sieht ein Messband vor, bei dem ein Handgriff von einem Träger ausgeht, der verschwenkbar ist.

Der vorliegenden Erfindung liegt die Aufgabe zu Grunde, ein Bandmaß mit handbetriebenem Aufspulmechanismus derart weiterzubilden, dass messtechnisch die Vorteile von Taschenbandmaßen gegeben sind, dass also problemlos Innen-Messungen sowie Messungen bei Eckanschlägen in beliebiger Orientierung durchgeführt werden können.

Zur Lösung der Aufgabe sieht die Erfindung vor, dass die Handhabe mit dem Träger entlang der Trommelachse axial verschiebbar in dem Gehäuse angeordnet ist, dass die Handhabe in einer ersten Stellung, der sogenannten Messstellung, bündig in die erste Außenseitenfläche übergeht oder zurückversetzt zu dieser verläuft und in einer das Aufrollen des Messbandes ermöglichenden zweiten Stellung, die angeordnet ist zum Erfassen der Handhabe, der sogenannten Nutzstellung, durch Verschieben entlang der Trommelachse über der ersten Außenseitenfläche zumindest abschnittsweise vorsteht.

Die Handhabe und der Träger bilden eine Einheit, wobei der Träger mit seiner Außenseite in Messstellung des Bandmaßes über die entsprechende Außenseitenfläche des Gehäuses nicht vorsteht. Mit anderen Worten ist die Handhabe mit dem Träger derart in der Messstellung positionierbar, dass die Außenseite des Gehäuses völlig frei ist, also Abschnitte von dem Träger und der Handhabe nicht überstehen. Folglich wird die Außenfläche des Gehäuses in der Messstellung von keinem Abschnitt der Handhabe einschließlich dessen Aufnahme bzw. Träger überragt. Dabei umfasst die Handhabe einen Griff wie ein Kurbelelement, über den die Handhabe drehbar ist. Der Griff bzw. das Kurbelelement sind schwenkbar von dem Träger aufgenommen.

Insbesondere ist vorgesehen, dass das Gehäuse eine Flachquadergeometrie mit einer entlang Ausziehrichtung des Messbandes verlaufenden Basisfläche aufweist, zu der sich senkrecht die erste und eine parallel zu dieser verlaufende zweite Außenseitenfläche erstrecken, und dass zwischen den Außenseitenflächen eine in die Basisfläche übergehende Umfangsfläche verläuft, wobei ein erster Abschnitt der Umfangsfläche von einem ersten Ende der Basisfläche ausgeht und einen basisflächenseitig verlaufenden von dem Messband durchsetzten Schlitz aufweist oder begrenzt und ein zweiter Abschnitt vom anderen Ende der Basisfläche ausgeht und senkrecht zu dieser verläuft. Dabei sind die Basisfläche, die erste und zweite Außenfläche und die Umfangsfläche äußere Flächen von das Gehäuse bildender Basiswandung, erster und zweiter Außenseitenwandung und Umfangswandung. Das Gehäuse besteht des Weiteren vorzugsweise aus zwei Halbschalen, so dass die Umfangs- und Basiswandung zweigeteilt sind.

In Weiterbildung der Erfindung ist vorgesehen, dass die Handhabe einen topfförmigen Basisabschnitt umfasst, der einen im Inneren des Gehäuses verlaufenden ersten Hohlzylinderabschnitt aufweist, der die das Messband aufnehmende Trommel ist. Der erste Hohlzylinderabschnitt geht von einer Bodenwandung des Basisabschnitts aus, die parallel oder in etwa parallel zu der ersten Außenseitenfläche ausgerichtet ist und ein verschwenkbares Griffelement enthält, das vorzugsweise vollständig in die Bodenwandung einlassbar oder über diese vorstehend anordbar ist. Dabei ist das Griffelement vorzugsweise um eine senkrecht zur Drehachse der Trommel verlaufende Achse verschwenkbar. Die Bodenwandung bzw. diese mit dem ersten Hohlzylinderabschnitt bildet folglich den Träger.

Des Weiteren geht von der Bodenwandung ein sich in Richtung der zweiten Außenseitenwandung erstreckender Vorsprung aus, der über eine in der zweiten Außenseitenwandung verlaufende Durchbrechung zum axialen Verschieben des Basisabschnitts kraftbeaufschlagbar ist. Dabei ist bevorzugterweise die Durchbrechung von einem elastischen Element wie einer Membran abgedeckt.

Eine Weiterbildung der Erfindung sieht vor, dass die Durchbrechung von einem Ringscheibenelement umgeben ist, das parallel oder in etwa parallel zur Außenfläche der zweiten Seitenwandung bzw. deren Außenfläche ausgerichtet ist, dass von dem Ringscheibenelement ein zweiter Hohlzylinderabschnitt ausgeht, der von dem ersten Hohlzylinderabschnitt der Handhabe umgeben und entlang diesem verschiebbar ist.

Der erste und zweite Hohlzylinderabschnitt bilden demzufolge eine geteilte bzw. teleskopartig ausgebildete Kurbeltrommel, deren das Griffelement aufweisendes Teil wahlweise in dem Gehäuse versenkt oder aus diesem bereichsweise vorstehend angeordnet sein kann.

Die erste Position kann als Messstellung bezeichnet werden, da ein Aufwickeln des Messbandes nicht erfolgt, vielmehr mit dem Messband gemessen wird. Die zweite Position kann als "erhabene Handhabe- oder Nutzstellung" bezeichnet werden, in der die Handhabe sich in der funktionsoptimalen Lage befindet.

Um sowohl in der Nutz- als auch in der Messstellung die Handhabe eindeutig zu positionieren, ist die Handhabe in jeder Stellung verrastbar. Hierzu kann von dem zweiten Hohlzylinderabschnitt zumindest ein senkrecht zur Trommelachse verlaufendes kraftbeaufschlagtes Rastelement ausgehen, dem Rastaufnahmen in dem ersten Hohlzylinderabschnitt zugeordnet sind, deren axialer Abstand dem Abstand zwischen der Nutz- und Messstellung der Handhabe entspricht. Insbesondere ist vorgesehen, dass das Rastelement als federvorgespanntes Kugelelement ausgebildet ist.

Zum Verstellen der Handhabe ist es nur erforderlich, dass auf den von der Bodenwandung der Handhabe ausgehenden Vorsprung, der auch als Kurbeldorn bezeichnet werden kann, durch die in der zweiten Seitenwandung vorhandene Durchbrechung hindurch ein Druck ausgeübt wird, um die Handhabe von der ersten Rastposition (Messstellung) in die erhabene Nutzstellung zu verschieben.

Erfindungsgemäß wird ein Bandmaß umfassend ein Gehäuse mit in diesem aufrollbaren bzw. aus diesem abziehbaren Messband vorgeschlagen, das von einer drehbar in dem Gehäuse gelagerten Trommel ausgeht, die über ein Griffelement drehbar ist, das von einer Handhabe ausgeht und zumindest abschnittsweise eine erste Außenseitenfläche des Gehäuses durchsetzt und von einem Träger ausgeht. Damit problemlos Innen-Messungen sowie Messungen bei Eckanschlägen in beliebiger Orientierung durchgeführt werden können, ist vorgesehen, dass die Handhabe entlang Trommelachse verschiebbar in dem Gehäuse angeordnet ist, dass die Handhabe mit dem Träger in einer ersten Stellung (Messstellung) bündig in die erste Außenseitenfläche übergeht oder zurückversetzt zu dieser verläuft und in einer zweiten Stellung (Nutzstellung) zum Erfassen des Elements über der ersten Außenseitenfläche zumindest abschnittsweise vorsteht. Weitere Einzelheiten, Vorteile und Merkmale der Erfindung ergeben sich nicht nur aus den Ansprüchen, sondern auch aus der nachfolgenden Beschreibung einer der Zeichnung zu entnehmenden bevorzugten Ausführungsform.

Es zeigen:
- Fig. 1: Vorderseite eines Gehäuses eines Bandmaßes mit versenkter Handhabe,
- Fig. 2: Rückseite des Gehäuses gemäß Fig. 1,
- Fig. 3: Draufsicht auf das Gehäuse der Fig. 1 und 2,
- Fig. 4: Vorderseite des Gehäuses des Bandmaßes gemäß Fig. 1 mit über dessen Außenseitenfläche vorstehender Handhabe,
- Fig. 5: eine Draufsicht auf das Bandmaß gemäß Fig. 4,
- Fig. 6: eine Darstellung des Bandmaßes gemäß Fig. 4 in Richtung IV,
- Fig. 7: eine Schnittdarstellung durch das Gehäuse bei versenkter Handhabe und
- Fig. 8: eine Schnittdarstellung entlang der Linie VIII-VIII in Fig. 4 in vergrößerter Darstellung.

Den Figuren ist eine Prinzipdarstellung eines Gehäuses 12, das auch als Kapsel bezeichnet werden kann, eines Bandmaßes 10 mit flachem Bandquerschnitt zu entnehmen, das für Innen- bzw. Eck-Anschlagsmessungen geeignet ist. Üblicherweise handelt es sich hierbei um Messbänder einer Länge von mehr als 10 m, wobei das Messband im Querschnitt eben ausgebildet, also nicht gewölbt ist, wie es bei Taschenbandmaßen mit federbetriebenem Aufspulmechanismus üblich ist.

Das Gehäuse 12 des Bandmaßes 10, das aus zwei Halbschalen 11, 13 besteht, weist eine flachquaderförmige Geometrie mit einer die Vorderseite bildenden ersten Seitenwandung 14 und parallel zu dieser verlaufenden die Rückseite bildenden zweiten Seitenwandung 16 auf. Die Außenflächen 18 und 20 der Seitenwandungen 14 und 16 verlaufen planparallel zueinander. Zwischen den Außenflächen 18 und 20 und senkrecht zu diesen erstreckt sich eine Basisfläche 22, die Außenfläche einer Basiswandung 23 des Gehäuses 12 ist. Des Weiteren erstreckt sich von der Basiswandung 23 ausgehend eine zwischen den Außenflächen 18 und 20 der Seitenwandungen 14, 16 sich erstreckende Umfangswandung 24, die abschnittweise einem Kreisabschnitt folgt (Bereich 26), der sich gegenüberliegend zu einem im Bereich der Basisfläche 22 verlaufenden Schlitz erstreckt, über den das über eine Schlaufe 28 erfassbare, jedoch nicht gezeichnete Messband aus dem Gehäuse 12 herausziehbar bzw. über diesen in das Gehäuse einziehbar ist.

Basiswandung 23 und Umfangswandung 24 bilden eine Einheit, sind jedoch in einer parallel zu den Seitenwandungen 14, 16 verlaufenden Ebene getrennt und zusammensetzbar. Die Teilabschnitte der Basis- und Umfangswandung 23, 24 bilden folglich die Ränder der Gehäusehalbschalen 11, 13.

Des Weiteren kann die Umfangswandung 24 abschnittsweise eine die Handhabung des Bandmaßes 10 erleichternde Erhöhung 30 aufweisen, die über Stufen 31, 35 in die Seitenwandungen 14, 16 übergeht.

In der ersten Seitenwandung 14, also der Vorderseite des Gehäuses 12 ist ein als Handhabe 32 ausgebildetes Element eingelassen und axial verschiebbar angeordnet, wie dies nachstehend näher erläutert wird. Über die Handhabe 32 ist das Messband aufwickelbar. Um die Handhabe 32 aus dem Gehäuse 12 herauszudrücken, damit diese über der Vorderseite, also der ersten Seitenwandung 14 vorsteht, ist in der Rückseite, also der zweiten Seitenwandung 20, eine Aussparung oder Durchbrechung 33 vorgesehen. Über die Durchbrechung 33 kann sodann eine Kraft auf die Handhabe 32 zum axialen Verschieben dieser einwirken.

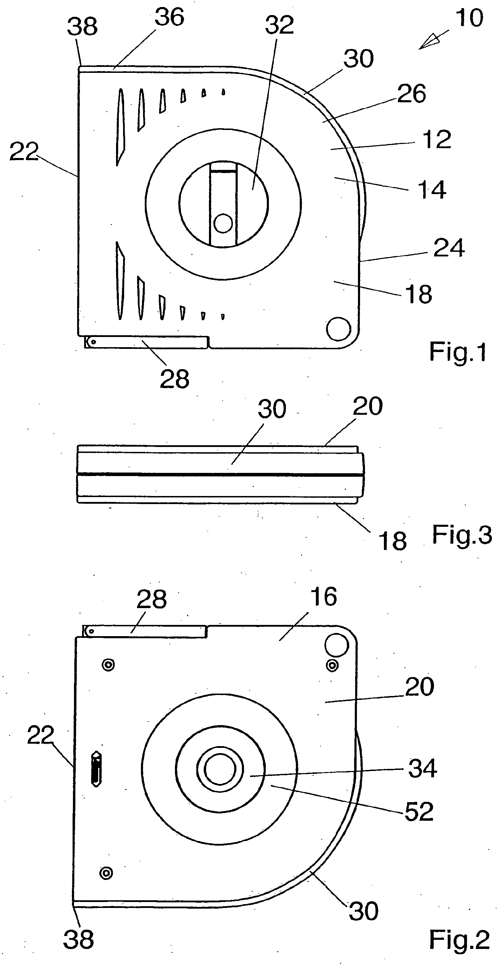

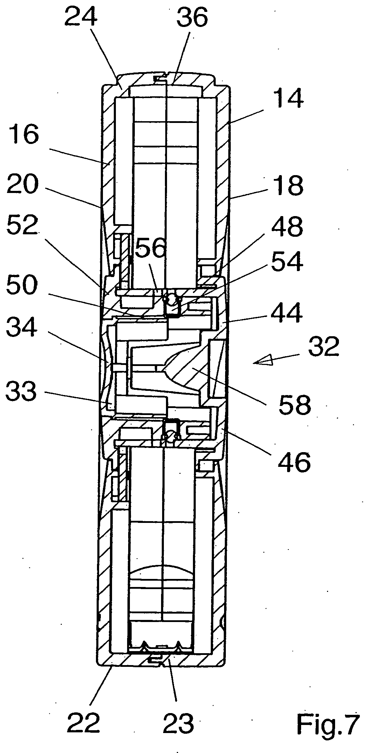

In der im Gehäuse 12 befindlichen ersten Stellung der Handhabe 32, die auch als Messstellung bezeichnet wird, ist die Handhabe 32 derart in dem Gehäuse 12 versenkt, dass die Handhabe 32 über der Außenfläche 18 der ersten Seitenwandung 14 nicht vorsteht, wie sich aus Fig. 3 und 7 ergibt.

Somit stehen freie planparallel verlaufende Außenflächen 18 und 20 der Vorder- und Rückseite des Gehäuses 12 zur Verfügung, so dass das Bandmaß für Eckanschläge beliebiger Orientierung geeignet ist. Auch besteht die Möglichkeit, das Bandmaß 10 für innere Messungen zu benutzen. Hierzu erstreckt sich der von der Basisfläche 22 ausgehende und zu dem Schlitz, der von dem Messband durchsetzt wird, gegenüberliegende Abschnitt 36 der Umfangswandung 24 senkrecht zur Basisfläche 22. Somit kann die Außenkante 38 des Gehäuses 12 als Anschlag zur Messung benutzt werden, wobei die Länge der Basisfläche 22 bemaßt sein muss.

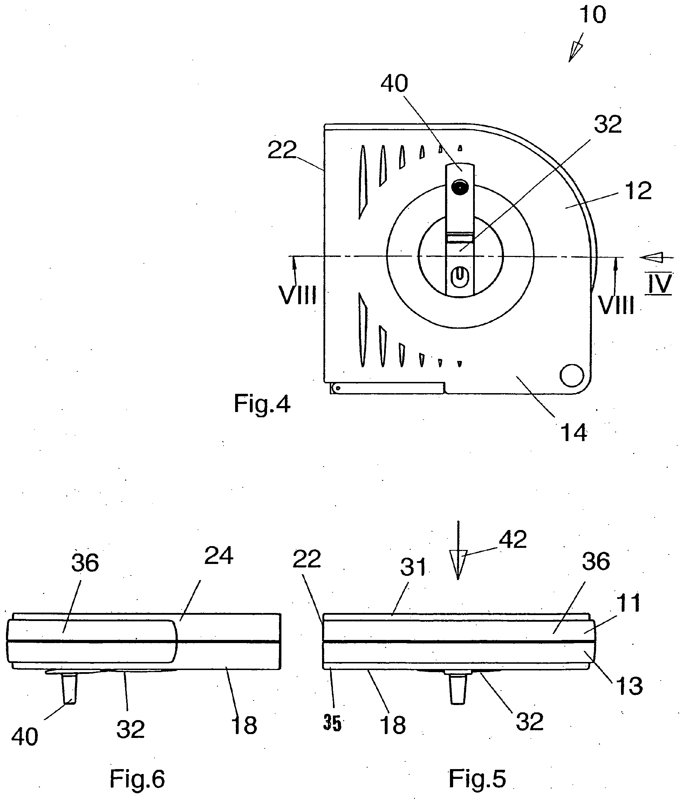

Die Fig. 4 bis 6 zeigen das Bandmaß 10 mit der Handhabe 32 in der zweiten Stellung, der sogenannten Nutzstellung, in der die Handhabe 32 aus dem Gehäuse 12, also in einem Umfang über der ersten Seitenwandung 14 bzw. Vorderseite des Gehäuses 12 und damit der Außenfläche 18 vorsteht, dass ein verschwenkbarer Kurbelgriff 40 erfassbar ist, um das nicht dargestellte Messband aufspulen zu können. Zuvor muss die Handhabe 32 aus dem Gehäuse 12 herausgedrückt werden. Dies wird durch den Pfeil 42 in Fig. 5 rein prinzipiell angedeutet.

Um die Handhabe 32 vollständig in dem Gehäuse 12 zu versenken, so dass die planparallel zueinander verlaufenden Außenflächen 18, 20 der Vorder- und Rückseite des Gehäuses 12 frei zugänglich sind und somit das Gehäuse 12 für Eckanschläge beliebiger

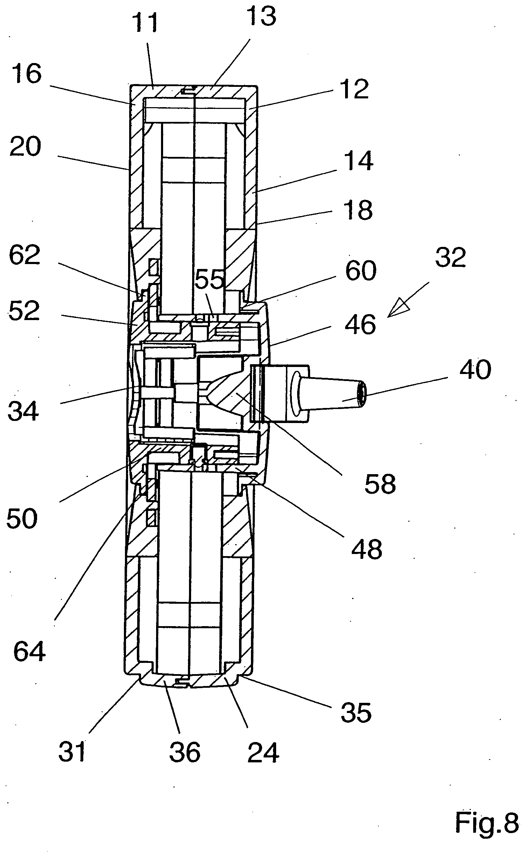

Orientierung geeignet ist, oder aus dem Gehäuse 12 vorstehen zu lassen, kann die den Fig. 7 und 8 zu entnehmende Konstruktion gewählt werden, die als bevorzugt anzugeben ist. Andere Realisierungsmöglichkeiten sind gleichfalls möglich.

Bei der vorgesehenen Konstruktion wird eine geteilte Kurbeltrommel verwendet, die sich aus einem Abschnitt der Handhabe 32 und einem Abschnitt der Rückseite oder zweiten Seitenwandung 16 zusammensetzt.

Wie sich aus den Fig. 7 und 8 ergibt, umfasst die Handhabe 32 einen topfförmigen Basisabschnitt 44, der aus einer Bodenwandung 46 und einem senkrecht oder im Wesentlichen senkrecht zu dieser und in Richtung der Rückseite oder zweiten Seitenwandung 16 sich erstreckenden ersten Hohlzylinderabschnitt 48 besteht, auf den das Messband aufwickelbar ist. Der Basisabschnitt 44 bzw. die Bodenwandung 46 bilden den Träger für den Kurbelgriff.

Der erste Hohlzylinderabschnitt 48 als der erste Trommelabschnitt umgibt einen zweiten Hohlzylinderabschnitt 50 als den zweiten Trommelabschnitt und ist mit diesem verrastbar. Der zweite Hohlzylinderabschnitt 50 geht in ein entlang der Rückseite oder zweiten Seitenwandung 16, jedoch über deren Außenfläche 20 nicht vorstehendes Ringscheibenelement 52 über, das drehbar in der Rückseite gelagert ist.

Von dem zweiten Hohlzylinderabschnitt 50 gehen federvorgespannte Rastelemente 54 aus, über die der erste Hohlzylinderabschnitt 48 in der Mess- oder Parkposition (Fig. 7) und in der Nutzstellung (Fig. 8), in der die Handhabe 32 über der Außenfläche 16 der Vorderseite oder ersten Seitenwandung 14 vorsteht, verrastbar ist. Hierzu weist der erste Hohlzylinderabschnitt 48 entsprechende Aussparungen 55, 56 auf, deren axialer Abstand dem Abstand zwischen der Mess- und der Nutzposition der Handhabe 32 entspricht.

Von der Bodenwandung 46 der Handhabe 32 erstreckt sich in Richtung der Durchbrechung 33 der Rückseitenwandung 14 ein als Kurbel- oder Auswerferdorn zu bezeichnender Vorsprung 58, über den die Handhabe 32 von der Mess- oder Parkstellung (Fig. 7) in die Nutzstellung, in der die Handhabe 32 über der Außenfläche 16 der Vorderseitenwandung 14 vorsteht, verschoben werden kann. Hierzu muss über die Durchbrechung 33 ein entsprechender Druck ausgeübt werden. Dabei kann die Durchbrechung 33 von einem Gummielement wie einer Membran 34 abgedeckt sein, die entsprechend der Fig. 7 über den zweiten Hohlzylinderabschnitt 50 fixiert sein kann.

Es besteht auch die Möglichkeit, dass von dem Dorn 58 ein Scheibenelement ausgeht, das in der Parkposition die Durchbrechung 33 verschließt und bei Krafteinwirkung in das Gehäuse 12 hinein drückbar ist, um die Handhabe 32 in die Nutzstellung zu verschieben. Ein starres Scheibenelement, das über die Durchbrechung 33 zugänglich ist, ohne dass eine integrale Ausbildung mit dem Vorsprung oder Dorn 58 erforderlich ist, kann gleichfalls benutzt werden. In diesem Fall muss das Scheibenelement gesondert geführt sein.

Von der Bodenwandung 44 der Handhabe 32 ragt ein im Schnitt L-förmiger Randabschnitt 60 ins Innere des Gehäuses 12, der in der Nutzstellung (Fig. 8) innenseitig an der ersten Seitenwandung 18 oder Vorderseite anliegt. Hierdurch erfährt die aus den Hohlzylinderabschnitten 48, 50 zusammengesetzte Trommel eine Fixierung in axialer Richtung, da entsprechend das Ringscheibenelement 52 mit einem ebenfalls L-förmig ausgebildeten Randabschnitt 62 an einer geometrisch angepassten Stufe 64 der zweiten Seitenwandung 16 anliegt. Die Stufe 64 begrenzt eine zentrale Öffnung der zweiten Seitenwandung 16.

Die Fig. 3 und 7 verdeutlichen, dass die Handhabe 32 und deren Aufnahme die Seitenaußenfläche 18 des Gehäuses 12 nicht überragt bzw. über diese irgendwie vorsteht, wenn das Messband nicht aufgewickelt, also das Bandmaß zum Messen benutzt werden soll.

## Patentansprüche

1. Bandmaß (10) umfassend ein Gehäuse (12) mit in diesem aufrollbaren bzw. aus diesem abziehbaren Messband, das von einer Trommel (48, 50) ausgeht, die drehbar um ihre Achse in dem Gehäuse gelagert ist, wobei die Trommel mittels einer Handhabe (32) drehbar ist, die zumindest abschnittsweise eine erste Außenseitenfläche (18) des Gehäuses durchsetzt und von einem Träger (46) ausgeht,
**dadurch gekennzeichnet,**
**dass** die Handhabe (32) mit dem Träger (46) entlang der Trommelachse axial verschiebbar in dem Gehäuse (12) angeordnet ist, dass die Handhabe (32) in einer ersten Stellung, der sogenannten Messstellung, bündig in die erste Außenseitenfläche (18) übergeht oder zurückversetzt zu dieser verläuft und in einer das Aufrollen des Messbandes ermöglichenden zweiten Stellung, die angeordnet ist zum Erfassen der Handhabe (32), der sogenannten Nutzstellung, durch Verschieben entlang der Trommelachse über der ersten Außenseitenfläche (18) zumindest abschnittsweise vorsteht.

2. Bandmaß nach Anspruch 1,
**dadurch gekennzeichnet,**
**dass** das Gehäuse (12) eine Flachquadergeometrie mit einer entlang Ausziehrichtung des Messbandes verlaufenden Basisfläche (22) aufweist, zu der sich senkrecht die erste und eine parallel zu dieser verlaufende zweite Außenseitenfläche (20) erstrecken, dass zwischen den Außenseitenflächen eine in die Basisfläche übergehende Umfangsfläche verläuft, wobei ein erster Abschnitt von einem ersten Ende der Basisfläche ausgeht und einen basisflächig verlaufenden von dem Messband durchsetzten Schlitz aufweist oder diesen begrenzt und ein zweiter Abschnitt (36) vom anderen Ende der Basisfläche ausgeht und senkrecht zu dieser verläuft.

3. Bandmaß nach Anspruch 1 oder 2,
**dadurch gekennzeichnet,**
**dass** die Basisfläche (22), die erste und die zweite Außenseitenfläche (18, 20) und die Umfangsfläche äußere Flächen von das Gehäuse (12) bildender Basiswandung (23), erster und zweiter Seitenwandung (14, 16) und Umfangswandung (24) sind.

4. Bandmaß nach zumindest einem der vorhergehenden Ansprüche,
**dadurch gekennzeichnet,**
**dass** die Handhabe (32) einen topfförmigem Basisabschnitt (44) mit einer parallel oder in etwa parallel zu der ersten Außenseitenfläche (18) ausgerichteten den Träger bildende Bodenwandung (46) und von dieser ausgehend und in das Innere des Gehäuses sich erstreckenden ersten Hohlzylinderabschnitt (48) umfasst, der zumindest abschnittsweise die Trommel bildet, und dass von der Bodenwandung das vorzugsweise verschwenkbare Griffelement (40) ausgeht, das vollständig in die Bodenwandung (46) einlassbar oder über diese vorstehend anordbar ist.

5. Bandmaß nach zumindest einem der vorhergehenden Ansprüche,
**dadurch gekennzeichnet,**
**dass** von der Bodenwandung (46) ein sich in Richtung der zweiten Seitenwandung (16) erstreckender Vorsprung (58) ausgeht, der über eine in der zweiten Seitenwandung verlaufenden Durchbrechung (33) zum axialen Verschieben des Basisabschnitts (44) kraftbeaufschlagbar ist, wobei die Durchbrechung (33) insbesondere von einem nachgiebigen Element wie Membran (34) abgedeckt oder einem gegebenenfalls integral mit dem Vorsprung (58) ausgebildeten Scheibenelement verschließbar ist.

6. Bandmaß nach zumindest einem der vorhergehenden Ansprüche,
**dadurch gekennzeichnet,**
**dass** die Durchbrechung (33) von einem Ringscheibenelement (52) umgeben ist, das parallel oder in etwa parallel zur Außenfläche (20) der zweiten Seitenwandung (16) bzw. deren Außenfläche (20) ausgerichtet ist, und dass von dem Ringscheibenelement ein zweiter Hohlzylinderabschnitt (50) ausgeht, der von dem ersten Hohlzylinderabschnitt (48) der Handhabe (32) umgeben ist, der entlang dem zweiten Hohlzylinderabschnitt verschiebbar ist, wobei der erste Hohlzylinderabschnitt (48) mit dem zweiten Hohlzylinderabschnitt (50) vorzugsweise verrastbar ist, insbesondere der erste Hohlzylinderabschnitt (48) mit dem zweiten Hohlzylinderabschnitt (50) in der Nutzstellung und/oder in der Messstellung der Handhabe (32) verrastbar ist.

7. Bandmaß nach zumindest einem der vorhergehenden Ansprüche,
**dadurch gekennzeichnet,**
**dass** der erste Hohlzylinderabschnitt (48) mit dem zweiten Hohlzylinderabschnitt (50) über zumindest ein in Richtung des ersten Hohlzylinderabschnitts kraftbeaufschlagtes Rastelement verrastbar ist, dem in dem ersten Hohlzylinderabschnitt des Basisabschnitts (44) Rastaufnahmen (55, 56) zugeordnet sind, deren axialer Abstand der Abstand zwischen der Nutzstellung und der Messstellung der Handhabe (32) ist.

8. Bandmaß nach zumindest einem der vorhergehenden Ansprüche,
**dadurch gekennzeichnet,**
**dass** die Bodenwandung (46) des Basisabschnitts (44) der Handhabe (32) einen sich ins Innere des Gehäuses (12) erstreckenden im Schnitt L-förmigen Rand (60) aufweist, der einen sich entlang Innenseite der ersten Seitenwandung (14) erstreckenden ringförmigen Abschnitt aufweist, der in der Nutzstellung der Handhabe (32) an einem geometrisch angepassten Ringabschnitt der ersten Seitenwandung anliegt.

9. Bandmaß nach zumindest einem der vorhergehenden Ansprüche,
**dadurch gekennzeichnet,**
**dass** das Ringscheibenelement (52) umfangsseitig eine Stufe (62) aufweist, die an einer geometrisch angepassten Stufe der zweiten Seitenwandung (16)anliegt, und drehbar in dem Gehäuse (12) gelagert ist, wobei insbesondere die von der Abdeckung wie Membran (34) abgedeckte Durchbrechung (33) von dem Ringscheibenelement (52) und dem von diesem ausgehenden zweiten Hohlzylinderabschnitt (50) begrenzt ist.

10. Bandmaß nach zumindest einem der vorhergehenden Ansprüche,
**dadurch gekennzeichnet,**
**dass** die erste und zweite Außenseitenfläche (18, 20) jeweils als eine Anlagefläche des Bandmaßes (10) ausgebildet sind, die senkrecht zu der Basisfläche (22) und senkrecht zu dem senkrecht von der Basisfläche ausgehenden zweiten Abschnitt (36) der Umfangsfläche (24) verlaufen.

11. Bandmaß nach zumindest einem der vorhergehenden Ansprüche,
**dadurch gekennzeichnet,**
**dass** die das Messband aufnehmende Trommel aus zwei abschnittsweise sich umgebenden Hohlzylinderabschnitten (48, 50) besteht, die axial zueinander verstellbar sind.

## Claims

1. Tape measure (10) comprising a housing (12) having a measuring tape reelable therein and pullable therefrom and extending from a drum (48, 50) which is rotatably mounted about its axis inside said housing, said drum being rotatable by means of a handle (32) which passes at least in some sections through a first outer side surface (18) of said housing and extends from a holder (46),
wherein
the handle (32) with the holder (46) is arranged inside the housing (12) axially movable along the drum axis, wherein said handle (32) in a first position, the so-called measuring position, merges flush with the first outer side surface (18) or is recessed relative thereto, and in a second position, the so-called use position, enabling the reeling on of the measuring tape and arranged for gripping said handle (32), projects at least in some sections above the first outer side surface (18) due to movement along the drum axis.

2. The tape measure according to Claim 1, **characterized in that** the housing (12) has a flat cuboid geometry with a base surface (22) extending in the direction in which the tape measure is pulled out, vertical to which run a first and parallel to that a second outer lateral surface (20), and that between the outer lateral surfaces a peripheral surface runs, which merges with the base surface, a first section extending from a first end of the base surface and having a slot running along the base surface through which the measuring tape passes, or which delimits said slot, and a second section (36) that extends from the other end of the base surface and extends vertical thereto.

3. The tape measure according to Claim 1 or 2, **characterized in that** the base surface (22), the first and second outer lateral surfaces (18, 20), and the peripheral outer surface are outer surfaces of the base wall (23), first and second lateral walls (14, 16), and peripheral wall (24), which form the housing (12).

4. The tape measure according to at least one of the preceding claims, **characterized in that** the handle (32) comprise a cup-shaped base section (44) having a floor wall (46) that is aligned parallel or substantially parallel to the first external lateral surface (18) and forming the support, and a first hollow cylinder section (48) that extends from the floor wall into the inside of the housing, the cylinder section forming the drum at least in some sections, and that a preferably pivotable holder element (40) extends from the floor cladding, said holding element can be embedded completely into the floor wall (46) or arranged to protrude above it.

5. The tape measure according to at least one of the preceding claims, **characterized in that** a lug (58) that extends in the direction of the second lateral wall (16) extends from the floor wall (46), it being possible to exert a force on the lug via an aperture (33) running in the second lateral wall in order to axially displace the base section (44), wherein the aperture (33) is covered preferably by a flexible element such as a membrane (34) or can be closed by a disc element that, if necessary, is an integral part of the lug (58).

6. The tape measure according to at least one of the preceding claims, **characterized in that** the aperture (33) is surrounded by a ring disc element (52) that is aligned parallel or substantially parallel to the outer surface (20) of the second lateral wall (16), or as the case may be, the external surface (20) thereof, and that from the ring disc element a second hollow cylinder section (50) extends, which is surrounded by the first hollow cylinder section (48) of the handle (32), which can be displaced along the second hollow cylinder section, wherein the first hollow cylinder section (48) can preferably be locked with the second hollow cylinder section (50), especially **in that** the first hollow cylinder section (48) can be locked with the second hollow cylinder section (50) in the use position and/or the measuring position of the handle (32).

7. The tape measure according to at least one of the preceding claims, **characterized in that** the first hollow cylinder section (48) can be locked with the second hollow cylinder section (50) via at least one locking element that can be acted on by a force in the direction of the first hollow cylinder section, to which locking element locking slots (55, 56) have been assigned in the first hollow cylinder section of the base section (44), the axial distance between the slots being the same as the distance between the use position and the measuring positions of the handle (32).

8. The tape measure according to at least one of the preceding claims, **characterized in that** the floor wall (46) of the base section (44) of the handle (32) has an edge (60) with an L-shape in sectional representation that extends into the inside of the housing (12), the edge having a ringshaped section along the inner side of the first lateral wall (14), which section, in the use position of the handle (32), rests on a geometrically adapted ring section of the first lateral wall.

9. The tape measure according to at least one of the preceding claims, **characterized in that** the ring disc element (52), on the peripheral side, has a step (62) that rests on a geometrically adapted step of the second lateral wall (16) and is rotatably mounted in the housing (12), wherein especially the aperture (33) that is covered by the cover such as a membrane (34) is delimited by the ring disc element (52) and the second hollow cylinder section (50) extending therefrom.

10. The tape measure according to at least one of the preceding claims, **characterized in that** the first and second outer lateral surfaces (18, 20) are each formed as a contact surfaces of the tape measure (10), and that they run perpendicular to the base surface (22) and perpendicular to the second section (36) of the peripheral surface (24), which extends vertically from the base surface.

11. The tape measure according to at least one of the preceding claims, **characterized in that** the drum receiving the measuring tape comprises two hollow cylinder sections (48, 50), which encompass each other in sections and are axially displaceable in relation to each other.

## Revendications

1. Mètre à ruban (10) comprenant un boîtier (12) avec ruban de mesure pouvant y être enroulé ou en être extrait, lequel ruban de mesure part d'une bobine (48, 50) installé de manière rotative avec son axe dans le boîtier, ladite bobine pouvant être tournée au moyen d'une manette (32) qui traverse au moins en partie une première face latérale extérieure (18) du boîtier et part d'un support (46),
**caractérisé en ce**
**que** la manette (32) avec le support (46) est disposée dans le boîtier (12) de manière à pouvoir être déplacée axialement le long de l'axe de la bobine, que la manette (32) dans une première position - dite position de mesure - s'intègre dans la première face latérale extérieure (18) en s'y alignant ou se trouve en retrait de celle-ci, et que ladite manette dans une seconde position permettant l'enroulement du ruban de mesure et la prise en main de la manette (32) - dite position d'utilisation - dépasse au moins partiellement de la première surface latérale extérieure (18) en raison du déplacement le long de l'axe de la bobine.

2. Mètre à ruban selon la revendication 1,
**caractérisé en ce**
**que** le boîtier (12) présente une géométrie parallélépipédique et plate avec une surface de base (22) s'étendant le long du sens d'extraction du ruban de mesure, perpendiculairement à laquelle s'étendent la première face latérale extérieure et la seconde (20) parallèle à celle-ci, qu'une surface périphérique se prolongeant dans la surface de base se situe entre les faces latérales extérieures, sachant qu'une première section part d'une première extrémité de la surface de base et présente une fente suivant la surface de base et traversée par le ruban de mesure ou délimite celle-ci, et qu'une seconde section (36) part de l'autre extrémité de la surface de base et s'étend perpendiculairement à celle-ci.

3. Mètre à ruban selon la revendication 1 ou 2,
**caractérisé en ce**
**que** la surface de base (22), la première et la seconde face latérale extérieure (18, 20) et la surface périphérique constituent les surfaces extérieures de la paroi de base (23) formant le boîtier (12), de la première et de la seconde paroi latérale (14, 16) et de la paroi périphérique (24).

4. Mètre à ruban selon au moins une des revendications précédentes,
**caractérisé en ce**
**que** la manette (32) comprend une section de base en forme de pot (44) avec une paroi inférieure (46) formant le support et parallèle ou presque parallèle à la première face latérale extérieure (18), ainsi qu'une première section de cylindre creux (48) partant de ladite paroi inférieure et pénétrant à l'intérieur du boîtier, ladite première section formant au moins en partie la bobine, et que la poignée (40), pivotable de préférence, part de la paroi inférieure et est entièrement encastrable dans ladite paroi inférieure (46) ou peut être disposée en saillie par rapport à celle-ci.

5. Mètre à ruban selon au moins une des revendications précédentes,
**caractérisé en ce**
**qu'**une partie en saillie (58) s'étend de la paroi inférieure (46) en direction de la seconde paroi latérale (16), laquelle partie en saillie peut être soumise à une force par le biais d'une ouverture (33) située dans la seconde paroi latérale pour obtenir un déplacement axial de la section de base (44), sachant que l'ouverture (33) est recouverte notamment d'un élément flexible telle une membrane (34) ou peut être fermée par un disque éventuellement solidaire de la partie en saillie (58).

6. Mètre à ruban selon au moins une des revendications précédentes,
**caractérisé en ce**
**que** l'ouverture (33) est entourée d'une rondelle annulaire (52) qui est positionnée parallèlement ou presque parallèlement à la surface extérieure (20) de la seconde paroi latérale (16) ou de sa surface extérieure (20), et qu'une seconde section de cylindre creux (50) part de ladite rondelle annulaire, laquelle seconde section est entourée de la première section de cylindre creux (48) de la manette (32) qui peut être déplacée le long de la seconde section de cylindre creux, sachant que la première section de cylindre creux (48) peut de préférence s'encliqueter dans la seconde section de cylindre creux (50) et notamment que la première section de cylindre creux (48) peut s'encliqueter dans la seconde section de cylindre creux (50) dans la position d'utilisation et/ou dans la position de mesure de la manette (32).

7. Mètre à ruban selon au moins une des revendications précédentes,
**caractérisé en ce**
**que** la première section de cylindre creux (48) peut s'encliqueter dans la seconde section de cylindre creux (50) par le biais d'au moins un élément d'encliquetage soumis à une force en direction de la première section de cylindre creux, des logements d'encliquetage (55, 56) étant affectés audit élément d'encliquetage dans la première section de cylindre creux de la base (44) et l'écart axial desdits logements d'encliquetage correspondant à l'écart entre la position d'utilisation et la position de mesure de la manette (32).

8. Mètre à ruban selon au moins une des revendications précédentes,
**caractérisé en ce**
**que** la paroi inférieure (46) de la section de base (44) de la manette (32) présente un bord en forme de L (60) pénétrant à l'intérieur du boîtier (12), lequel bord présente une section annulaire s'étendant le long de la face interne de la première paroi latérale (14), laquelle section annulaire repose, dans la position d'utilisation de la manette (32), sur une section annulaire de la première paroi latérale, présentant une forme géométrique adaptée.

9. Mètre à ruban selon au moins une des revendications précédentes,
**caractérisé en ce**
**que** la rondelle annulaire (52) présente un décrochement (62) à sa périphérie qui repose sur un décrochement de la seconde paroi latérale (16), présentant une forme géométrique adaptée et qui est monté dans le boîtier (12) de manière à tourner, sachant que notamment l'ouverture (33) recouverte par un cache tel qu'une membrane (34) est délimitée par la rondelle annulaire (52) et par la seconde section de cylindre creux (50) partant de celle-ci.

10. Mètre à ruban selon au moins une des revendications précédentes,
**caractérisé en ce**
**que** la première surface latérale extérieure et la seconde (18, 20) sont constituées sous forme de surfaces d'appui du mètre à ruban (10), qui sont positionnées perpendiculairement à la base (22) et perpendiculairement à la seconde section (36) de la surface périphérique (24) partant perpendiculairement de la surface de base.

11. Mètre à ruban selon au moins une des revendications précédentes,
**caractérisé en ce**
**que** la bobine accueillant le ruban de mesure se compose de deux sections de cylindre creux (48, 50) qui se chevauchent partiellement et qui peuvent être déplacées axialement l'une par rapport à l'autre.
